# EUROPEAN PATENT SPECIFICATION

(11) **EP 2 772 613 B1**
(45) Date of publication and mention of the grant of the patent: **30.12.2020**
(21) Application number: 14157387.3
(22) Date of filing: 28.02.2014
(51) Int. Cl.: F01D 5/14

(54) **TURBOMACHINE BLADE AND RELATIVE PRODUCTION METHOD**
TURBOMASCHINENSCHAUFEL UND ZUGEHÖRIGES HERSTELLUNGSVERFAHREN
AUBE DE TURBOMACHINE ET PROCÉDÉ DE PRODUCTION ASSOCIÉ

(30) Priority: 28.02.2013 IT TV20130029
(43) Date of publication of application: 03.09.2014
(73) Proprietor: Pietro Rosa T.B.M. S.r.l., Maniago (IT)
(72) Inventor: Maurizio, Andrea, 33092 CAVASSO NUOVO (IT)
(74) Representative: Bellemo, Matteo

(56) References cited:
- DE-A1- 19 858 702
- DE-A1-102009 052 882
- US-A1- 2011 005 075

## Description

The present invention relates to a turbomachine blade and relative production method.

More specifically, the present invention relates to a method of producing a rotor or stator blade for a compressor or front fan of an aircraft turbine engine, to which use the following description refers purely by way of example.

Document DE 198 58 702 A1 relates to a turbomachine blade with the features of the preamble of claim 1 and to a relative production method.

As is known, rotor and stator blades of aircraft turbine engine compressors substantially comprise a coupling root designed to fit and lock rigidly to the compressor centre hub or blade mounting disk; and an airfoil-shaped oblong member, which cantilevered extends from the coupling root, so as to cantilevered project radially outwards of the hub or blade mounting disk when the coupling root is fixed inside the centre hub or blade mounting disk.

Stator blades also have an upper coupling head, which is located at the top end of the airfoil-shaped oblong member, i.e. at the opposite end to the coupling root, and is designed to fit and lock rigidly to the outer blade mounting ring of the compressor.

Having to withstand fairly severe mechanical stress and heat, the lower coupling root, the airfoil-shaped oblong member, and the upper coupling head (if there is one) are usually formed in one piece from a single block of high-strength metal, which is variously machined to shape the blade as required.

Milling a blade from a single block of metal, however, is an extremely painstaking, time-consuming job requiring special numeric-control milling machines capable of machining large workpieces to a high degree of precision. As a result, blades of this sort are extremely expensive to produce.

It is therefore an aim of the present invention to increase the rigidity and mechanical strength of a turbomachine blade and provide a method of producing a turbomachine blade which can significantly reduce the cost of manufacturing metal blades for compressors of aircraft turbine engines.

In compliance with the above aims, according to the present invention there is provided a turbomachine blade as defined in Claim 1 and preferably, though not necessarily, in any one of the Claims dependent on Claim 1.

According to the present invention, there is also provided a method of producing a turbomachine blade, as defined in Claim 10 and preferably, though not necessarily, in any one of the Claims dependent on Claim 10.

A non-limiting embodiment of the present invention will be described by way of example with reference to the attached drawings, in which :
Figure 1 shows a perspective view of a turbomachine blade in accordance with the teachings of the present invention;
Figure 2 shows a sectioned perspective view of the Figure 1 blade;
Figures 3 to 12 schematically show some steps in the method of producing the Figure 1 and 2 turbomachine blade; whereas
Figure 13 shows a partly exploded perspective view of a second embodiment of the Figure 1 turbomachine blade.

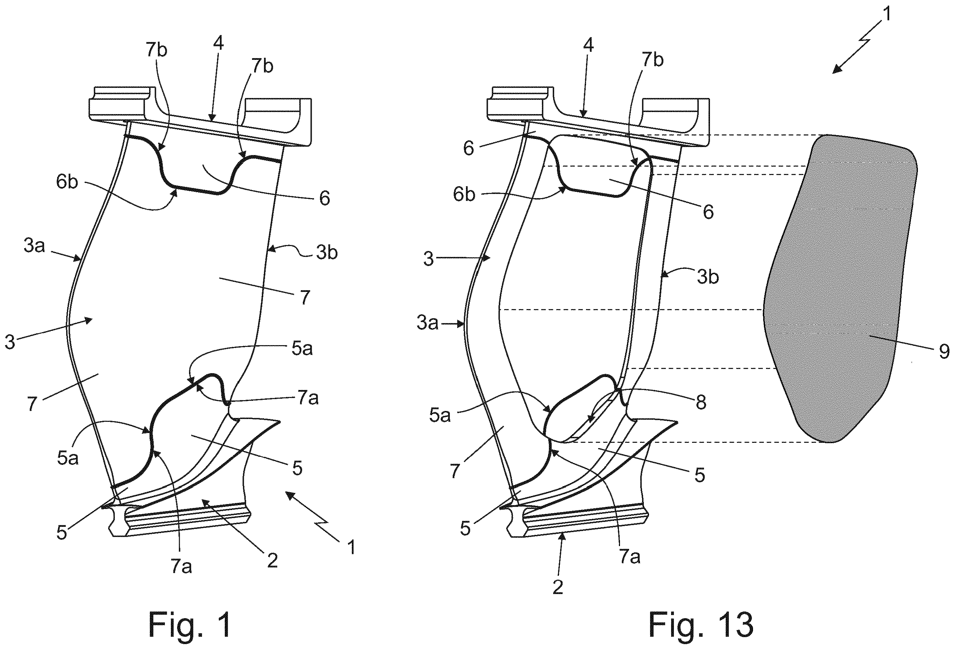

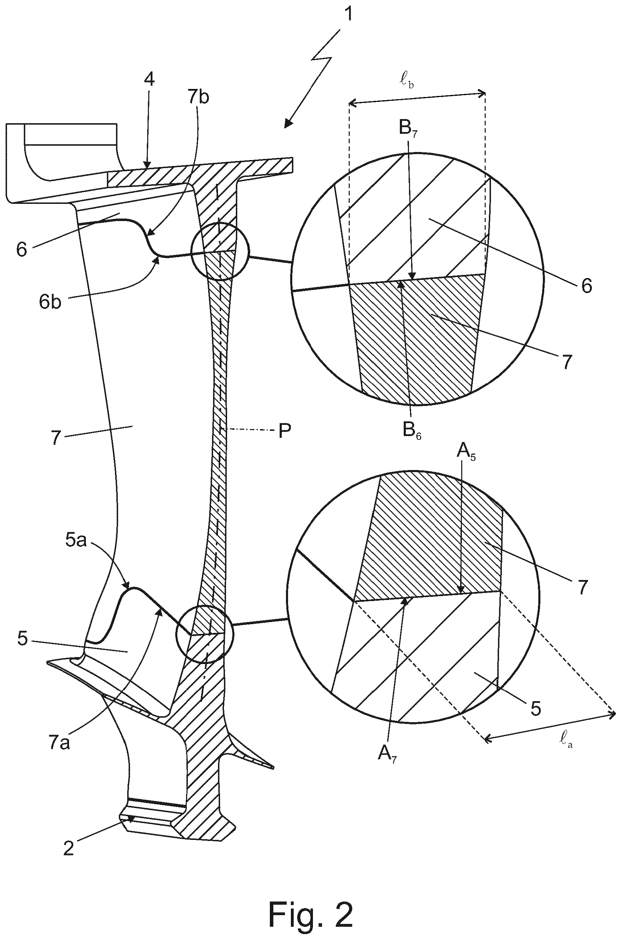

With reference to Figures 1 and 2, Number 1 indicates as a whole a turbomachine blade, which may be advantageously used, for example, in the compressor or front fan of a turbine engine preferably, though not necessarily, of the type used in aircraft.

Blade 1 is made of metal, and substantially comprises: a lower coupling root 2 designed to fit and lock rigidly to the turbine engine hub or centre blade mounting disk (not shown); an airfoil-shaped oblong member 3 which cantilevered extends from coupling root 2, so as to cantilevered project substantially radially outwards of the hub or blade mounting disk (not shown) when coupling root 2 is fixed inside the hub or centre blade mounting disk; and an upper coupling head 4, which is located at the second end of airfoil-shaped oblong member 3, i.e. at the opposite end to coupling root 2, and is designed to fit and lock rigidly to the turbine engine outer blade mounting ring (not shown).

In the example shown, coupling root 2, airfoil-shaped oblong member 3, and coupling head 4 are preferably, though not necessarily, made of titanium alloy, aluminium alloy, or special high-strength steel.

In addition, airfoil-shaped oblong member 3 is divided into a lower connecting fin 5, which cantilevered projects from coupling root 2 towards coupling head 4 and is formed in one piece with coupling root 2; an upper connecting fin 6, which cantilevered projects from coupling head 4 towards coupling root 2 and is formed in one piece with coupling head 4; and a centre plate-like body 7, which is shaped and positioned between the two connecting fins 5 and 6 to form an extension of the fins, and is butt-welded to connecting fins 5 and 6 to form one piece with connecting fins 5 and 6.

More specifically, the lower edge 7a of centre plate-like body 7 and the ridge 5a of lower connecting fin 5 are shaped to mate along substantially strip-shaped first conjugate mating surfaces A₅, A₇ complementary to each other, and which extend seamlessly from the leading edge 3a to the trailing edge 3b of airfoil-shaped oblong member 3 along a curved profile/path in the laying plane/centreline plane P of airfoil-shaped oblong member 3. At least along a centre portion of a length preferably equal to over 60% of the total length of conjugate mating surfaces A₅, A₇, conjugate mating surfaces A₅, A₇ are preferably of substantially constant width lₐ substantially equal locally to the maximum thickness of centre plate-like body 7.

In other words, the lower edge 7a of centre plate-like body 7 is defined by strip-shaped mating surface A₇, the ridge 5a of lower connecting fin 5 is defined by strip-shaped mating surface A₅ perfectly complementary to strip-shaped mating surface A₇, and the two strip-shaped mating surfaces A₅ and A₇ mate one to the other.

More specifically, the width lₐ of strip-shaped mating surfaces A₅ and A₇ is substantially equal to the maximum thickness of centre plate-like body 7 along a centre portion of a length equal to over 80% of the total length of strip-shaped mating surfaces A₅ and A₇.

More specifically, in the example shown, the width lₐ of strip-shaped mating surfaces A₅ and A₇ is preferably substantially equal to the maximum thickness of centre plate-like body 7 up to a distance of less than 10 mm (millimetres) from leading edge 3a and trailing edge 3b of airfoil-shaped oblong member 3 respectively.

Moreover, strip-shaped mating surfaces A₅ and A₇ preferably, though not necessarily, extend from leading edge 3a to trailing edge 3b of airfoil-shaped oblong member 3 along a curved, substantially Ω (omega) shaped profile/path.

Likewise, the upper edge 7b of centre plate-like body 7 and the ridge 6b of upper connecting fin 6 are shaped to mate along substantially strip-shaped second conjugate mating surfaces B₆, B₇ complementary to each other, and which extend seamlessly from the leading edge 3a to the trailing edge 3b of airfoil-shaped oblong member 3 along a curved profile/path in the laying laying plane/centreline plane P of airfoil-shaped oblong member 3. At least along a centre portion of a length preferably equal to over 60% of the total length of conjugate mating surfaces B₆, B₇, second conjugate mating surfaces B₆, B₇ are preferably of substantially constant width l_{b} substantially equal to the maximum thickness of centre plate-like body 7.

Obviously, the width l_{b} of strip-shaped mating surfaces B₆ and B₇ also substantially equals width lₐ of strip-shaped mating surfaces A₅ and A₇.

In other words, the upper edge 7b of centre plate-like body 7 is defined by strip-shaped mating surface B₇, the ridge 6b of upper connecting fin 6 is defined by strip-shaped mating surface B₆ perfectly complementary to strip-shaped mating surface B₇, and the two strip-shaped mating surfaces B₆ and B₇ mate one to the other.

More specifically, the width l_{b} of strip-shaped mating surfaces B₆ and B₇ is substantially equal to the maximum thickness of centre plate-like body 7 along a centre portion of a length equal to over 80% of the total length of strip-shaped mating surfaces B₆ and B₇.

More specifically, in the example shown, the width l_{b} of strip-shaped mating surfaces B₆ and B₇ is preferably substantially equal to the maximum thickness of centre plate-like body 7 up to a distance of less than 10 mm (millimetres) from leading edge 3a and trailing edge 3b of airfoil-shaped oblong member 3 respectively.

Moreover, second strip-shaped mating surfaces B₆ and B₇ preferably, though not necessarily, extend from leading edge 3a to trailing edge 3b of airfoil-shaped oblong member 3 along a curved, substantially Ω (omega) shaped profile/path.

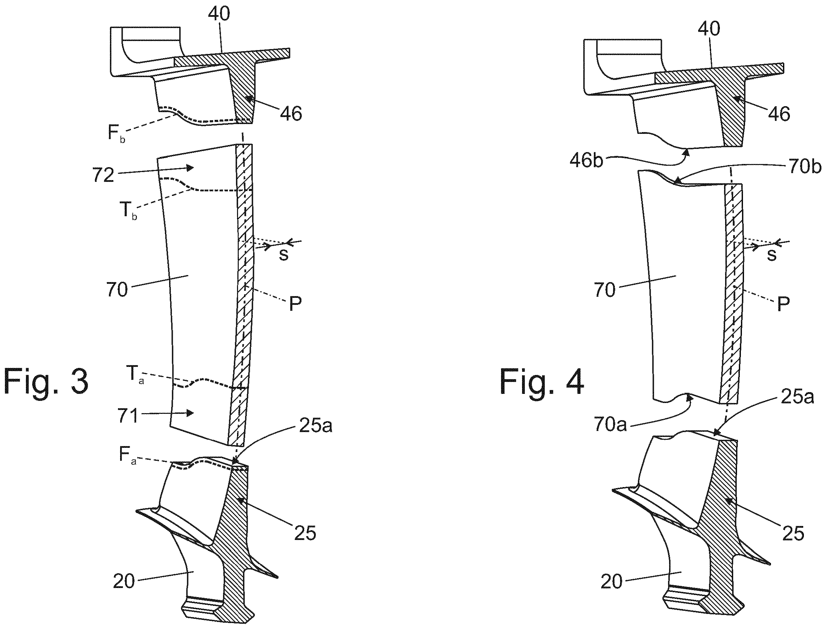

With reference to Figures 3 and 4, the method of producing blade 1 comprises :
- making, preferably by milling and/or stamping and/or forging and/or die-casting, a first semifinished metal part 20, the three-dimensional shape of which over-approximates the shape of coupling root 2 of blade 1, and which also has a projecting appendage 25, the three-dimensional shape of which over-approximates the shape of lower connecting fin 5;
- making, preferably by stamping and/or bending and/or forging and/or die-casting, a metal plate 70 of substantially constant thickness s over-approximating the maximum thickness of centre plate-like body 7 of airfoil-shaped oblong member 3 of blade 1, and the three-dimensional shape of which over-approximates the shape of centre plate-like body 7 of airfoil-shaped oblong member 3; and
- making, preferably by milling and/or stamping and/or forging and/or die-casting, a second semifinished metal part 40, the three-dimensional shape of which over-approximates the shape of coupling head 4 of blade 1, and which also has a projecting appendage 46, the three-dimensional shape of which over-approximates the shape of upper connecting fin 6.

More specifically, the difference between the thickness s of metal plate 70 and the maximum thickness of centre plate-like body 7 is less than 2 millimetres, and preferably even less than 1 millimetre.

In the example shown, in particular, the thickness s of metal plate 70 preferably ranges between 5 mm and 40 mm (millimetres).

Again with reference to Figures 3 and 4, the method of producing blade 1 also comprises :
- removing, preferably by cutting and subsequent milling and/or other material-removing machining operation, the bottom portion 71 of plate 70 located beyond a first transverse reference line Tₐ having a curved profile in the laying plane/ centreline plane P of plate 70; and
- removing, preferably by cutting and/or milling and/or other material-removing machining operation, the portion of the ridge 25a of projecting appendage 25 of semifinished part 20 located beyond a second transverse reference line Fₐ which, in the laying plane/centreline plane P of projecting appendage 25, has a curved profile substantially identical to that of first transverse reference line Tₐ.

Preferably, first transverse reference line Tₐ is the locus of points in which the thickness of plate 70 over-approximates locally the maximum thickness of centre plate-like body 7 of airfoil-shaped oblong member 3 of blade 1, preferably by a margin of less than a millimetre. And likewise, second transverse reference line Fₐ is the locus of points in which the thickness of projecting appendage 25 over-approximates locally the maximum thickness of centre plate-like body 7 of airfoil-shaped oblong member 3 of blade 1, preferably by a margin of less than a millimetre.

Preferably, first transverse reference line Tₐ has a curved, substantially Ω (omega) shaped profile; and second transverse reference line Fₐ has a curved, substantially Ω (omega) shaped profile substantially identical to that of transverse reference line Tₐ.

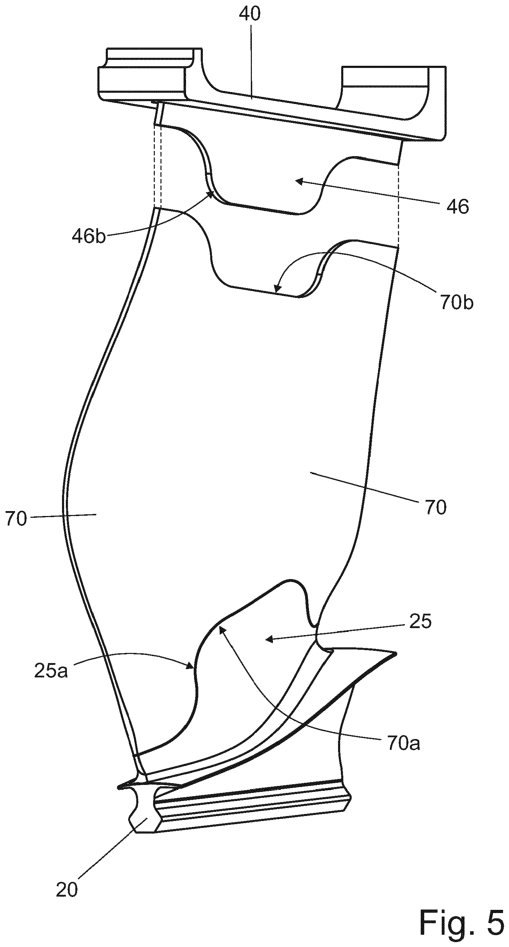

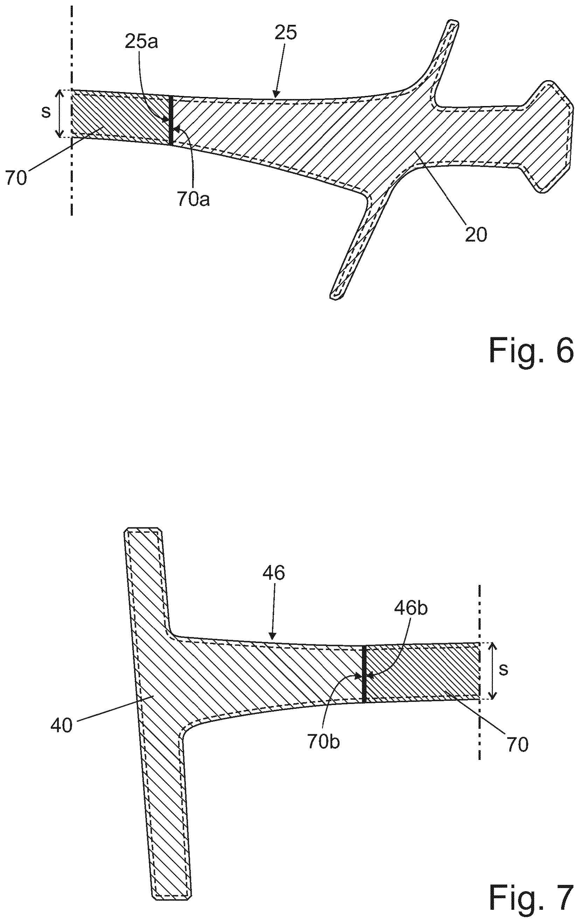

Next, as shown in Figures 5 and 6, the method of producing blade 1 comprises :
- placing the lower edge 70a, corresponding to first transverse reference line Tₐ, of plate 70 on the ridge 25a, corresponding to second transverse reference line Fₐ, of projecting appendage 25 of semifinished part 20, so that plate 70 is aligned locally with appendage 25 of semifinished part 20; and
- butt-welding the lower edge 70a of plate 70 to projecting appendage 25 of semifinished part 20 to connect the two parts rigidly to each other.

As shown in Figures 3 and 4, the method of producing blade 1 also comprises :
- removing, preferably by cutting and subsequent milling and/or other material-removing machining operation, the top portion 72 of plate 70 located beyond a third transverse reference line T_{b} having a curved profile in the laying plane/centreline plane P of plate 70; and
- removing, preferably by cutting and/or milling and/or other material-removing machining operation, the portion of ridge 46b of projecting appendage 46 of semifinished part 40 located beyond a fourth transverse reference line F_{b} which, in the laying plane/ centreline plane P of projecting appendage 46, has a curved profile substantially identical to that of third transverse reference line T_{b}.

Preferably, third transverse reference line T_{b} is the locus of points in which the thickness of plate 70 over-approximates locally the maximum thickness of centre plate-like body 7 of airfoil-shaped oblong member 3 of blade 1, preferably by a margin of less than a millimetre. And likewise, fourth transverse reference line F_{b} is the locus of points in which the thickness of projecting appendage 46 over-approximates locally the maximum thickness of centre plate-like body 7 of airfoil-shaped oblong member 3 of blade 1, preferably by a margin of less than a millimetre.

Preferably, third transverse reference line T_{b} has a curved, substantially Ω (omega) shaped profile; and fourth transverse reference line F_{b} has a curved, substantially Ω (omega) shaped profile substantially identical to that of transverse reference line T_{b}.

Next, as shown in Figures 5 and 7, the method of producing blade 1 comprises :
- placing the upper edge 70b, corresponding to third transverse reference line T_{b}, of plate 70 on the ridge 46b, corresponding to fourth transverse reference line F_{b}, of projecting appendage 46 of semifinished part 40, so that plate 70 is aligned locally with projecting appendage 46 of semifinished part 40; and
- butt-welding the upper edge 70b of plate 70 to projecting appendage 46 of semifinished part 40 to connect the two parts rigidly to each other.

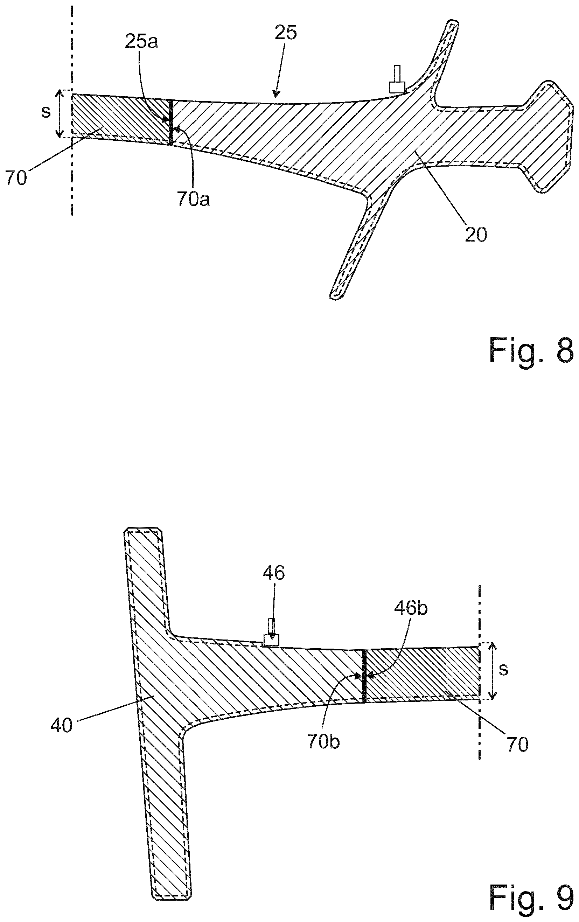

With reference to Figures 8 and 9, after welding lower edge 70a of plate 70 to projecting appendage 25 of semifinished part 20, and upper edge 70b of plate 70 to projecting appendage 46 of semifinished part 40, the method of producing blade 1 comprises trimming/ machining, by milling or other material-removing machining operation, the excess material from the resulting part to obtain coupling root 2, airfoil-shaped oblong member 3, and coupling head 4 of blade 1 of the desired shape.

More specifically, during the step of removing the excess material from the part formed by butt-welding plate 70 to the two semifinished parts 20 and 40, the method of producing blade 1 comprises :
- trimming/machining, by milling or other material-removing machining operation, excess metal off the two major faces of plate 70, including the joins between plate 70 and the two semifinished parts 20 and 40, to obtain airfoil-shaped oblong member 3; and/or
- trimming/machining, by milling or other material-removing machining operation, excess metal off the long side edges of plate 70, so as to form leading edge 3a and trailing edge 3b of airfoil-shaped oblong member 3; and/or
- trimming/machining, by milling or other material-removing machining operation, excess metal off the two semifinished parts 20 and 40 to obtain coupling root 2 and coupling head 4 of blade 1.

Once the above material-removing machining operations are completed, plate 70 forms centre plate-like body 7 of airfoil-shaped oblong member 3; semifinished part 20 forms both coupling root 2 of blade 1 and lower connecting fin 5 of airfoil-shaped oblong member 3; and semifinished part 40 forms both coupling head 4 of blade 1 and upper connecting fin 6 of airfoil-shaped oblong member 3.

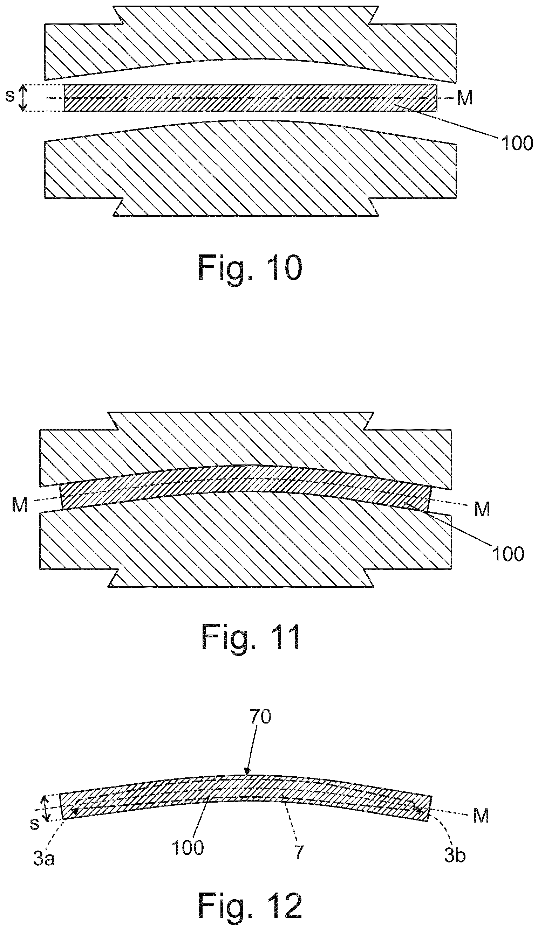

In addition to the above, and with reference to Figures 10, 11 and 12, in the example shown metal plate 70 of constant thickness, and of a three-dimensional shape over-approximating the shape of centre plate-like body 7 of airfoil-shaped oblong member 3, is preferably formed from a large flat metal plate (not shown) of constant thickness, over-approximating the maximum thickness of centre plate-like body 7 of airfoil-shaped oblong member 3 of blade 1, by a process comprising :
- cutting, from said large flat metal plate (not shown), a plate piece 100 with a contour over-approximating the flat contour of centre plate-like body 7 of airfoil-shaped oblong member 3 of blade 1; and
- twisting and curving the plate piece 100 via press-forming (i.e. via forming with no noticeable reduction in the nominal thickness of the plate), so that the final three-dimensional shape of the centreline plane M of press-formed plate piece 100 substantially matches the three-dimensional shape of centreline plane P of centre plate-like body 7 of airfoil-shaped oblong member 3 of blade 1, to obtain plate 70.

In the example shown, the flat metal plate is preferably 5mm to 40 mm (millimetres) thick.

The particular structure of blade 1 and the method of producing blade 1 as described above have numerous advantages.

Firstly, the method of producing blade 1 allows the semifinished parts, eventually forming coupling root 2, airfoil-shaped oblong member 3 and coupling head 4 of blade 1, to be produced separately using production processes best suited to the three-dimensional shape and desired mechanical characteristics of each part.

Moreover, joining centre plate-like body 7 to upper and lower connecting fins 5 and 6 along conjugate mating surfaces A₅, A₇, B₆ and B₇, which extend seamlessly from leading edge 3a to trailing edge 3b of airfoil-shaped oblong member 3 along a curved profile/path in the laying plane/centreline plane P of airfoil-shaped oblong member 3, enormously increases the rigidity and mechanical strength of blade 1, as compared with turbomachine blades with perfectly flat conjugate mating surfaces perpendicular to the laying plane/centreline plane of the airfoil.

Using a metal plate 70 of constant thickness over-approximating the maximum thickness of centre plate-like body 7 of airfoil-shaped oblong member 3 of blade 1 furthermore drastically reduces the amount of excess material to be milled or otherwise machined off, and therefore also the time and cost this involves.

Last but not least, by welding the lower edge 70a of plate 70 to projecting appendage 25 of semifinished part 20 (i.e. butt-welding the lower edge 7a of centre plate-like body 7 to ridge 5a of lower connecting fin 5) along transverse reference line Tₐ formed by the locus of points in which the thickness of plate 70 over-approximates locally the maximum thickness of centre plate-like body 7 of airfoil-shaped member 3 of blade 1, the amount of excess material to be removed from the weld area between the two parts is minimized, with all the advantages this affords in terms of mechanical strength of the weld between centre plate-like body 7 and lower connecting fin 5 of coupling root 2.

Likewise, by welding the upper edge 70b of plate 70 to projecting appendage 46 of semifinished part 40 (i.e. butt-welding the upper edge 7b of centre plate-like body 7 to ridge 6a of upper connecting fin 6) along transverse reference line T_{b} formed by the locus of points in which the thickness of plate 70 over-approximates locally the maximum thickness of centre plate-like body 7 of airfoil-shaped member 3 of blade 1, the amount of excess material to be removed from the weld area between the two parts is minimized, with all the advantages this affords in terms of mechanical strength of the weld between centre plate-like body 7 and upper connecting fin 6 of coupling head 4.

Clearly, changes may be made to blade 1 and to the method of producing it, without, however, departing from the scope of the present invention.

For example, blade 1 may have no coupling head 4, thus simplifying the method of producing blade 1.

In other words, airfoil-shaped oblong member 3 may comprise lower connecting fin 5, which cantilevered projects from and is formed in one piece with coupling root 2; and centre plate-like body 7, which in this case only forms an extension of lower connecting fin 5, and is butt-welded to, to form one piece with, lower connecting fin 5.

In another not shown variation, coupling head 4 of blade 1 may even be formed in one piece with centre plate-like body 7.

With reference to Figure 13, in a different embodiment of blade 1, airfoil-shaped oblong member 3 may have a closed weight-reducing inner cavity, the three-dimensional shape of which preferably, though not necessarily, substantially matches, to a smaller scale, the three-dimensional shape of airfoil-shaped oblong member 3 as a whole.

More specifically, in the example shown, airfoil-shaped oblong member 3 has, substantially in the centre of one of its two major faces, at least one large hollow weight-reducing seat 8 of predetermined shape and preferably extending over 40% of the total area of the major face of airfoil-shaped oblong member 3; and furthermore comprises a cover plate 9, which is complementary in shape to the opening of hollow seat 8, and is fixed irremovably - preferably welded along its entire peripheral edge - to the major face of airfoil-shaped oblong member 3 in which hollow seat 8 is formed, so as to seal the opening of hollow seat 8 and form the sealed weight-reducing cavity of airfoil-shaped oblong member 3.

In which case, after removing the excess material from the part formed by butt-welding plate 70 to the two semifinished parts 20 and 40, the method of producing blade 1 comprises :
- forming, on one of the two major faces of airfoil-shaped oblong member 3, by milling or other material-removing machining operation, a large hollow weight-reducing seat 8 of predetermined shape and preferably extending over 40% of the total area of the major face of airfoil-shaped oblong member 3;
- cutting and curving a metal plate of suitable thickness, to form a cover plate 9, which is complementary in shape to the opening of hollow seat 8 formed previously on one of the two major faces of airfoil-shaped oblong member 3;
- placing cover plate 9 over, so as to seal, the opening of hollow seat 8 and form the sealed weight-reducing cavity of airfoil-shaped oblong member 3; and
- welding the peripheral edge of cover plate 9 to the peripheral edge of hollow seat 8 to secure cover plate 9 irremovably to the rest of airfoil-shaped oblong member 3.

Preferably, the shape of hollow seat 8 substantially matches, to a smaller scale, the three-dimensional shape of airfoil-shaped oblong member 3 as a whole.

If, in addition to centre plate-like body 7 of airfoil-shaped oblong member 3, milling hollow weight-reducing seat 8 also involves one or both connecting fins 5 and 6, it will obviously be the nominal widths lₐ and l_{b} of strip-shaped conjugate mating surfaces A₅, A₇ and B₆, B₇ that are substantially constant and over-approximate the maximum thickness of centre plate-like body 7, at least along a centre portion of a length equal to over 60% of the total length of strip-shaped mating surfaces A₅, A₇ and B₆, B₇.

## Claims

1. A turbomachine blade (1) comprising a metal coupling root (2), and a metal airfoil-shaped oblong member (3) cantilevered projecting from the coupling root (2); the airfoil-shaped oblong member (3) being divided into at least a lower connecting fin (5) cantilevered projecting from and formed in one piece with the coupling root (2), and into a main plate-like body (7) which forms an extension of said lower connecting fin (5) and is butt-welded to said lower connecting fin (5) to form one piece with the same fin;
the lower edge (7a) of the main plate-like body (7) and the ridge (5a) of the lower connecting fin (5) are shaped to merge along strip-shaped first conjugate mating surfaces (A₅, A₇) complementary to each other,
**characterized in that** the lower edge (7a) and the ridge (5a) extend, on the laying plane/centreline plane (P) of the airfoil-shaped oblong member (3), from the leading edge (3a) to the trailing edge (3b) of the airfoil-shaped oblong member (3) along a curved path.

2. A turbomachine blade as claimed in Claim 1, **characterized in that** said first conjugate mating surfaces (A₅, A₇) extend from the leading edge (3a) to the trailing edge (3b) of the airfoil-shaped oblong member (3) along a curved, substantially Ω (omega) shaped path.

3. A turbomachine blade as claimed in Claim 1 or 2, **characterized in that** a centre portion of given length of said first conjugate mating surfaces (A₅, A₇) is of substantially constant width (lₐ) substantially equal to the maximum thickness of the main plate-like body (7).

4. A turbomachine blade as claimed in Claim 3, **characterized in that** the width (lₐ) of said first conjugate mating surfaces (A₅, A₇) is substantially constant, and substantially equal to the maximum thickness of the main plate-like body (7), at least along a centre portion of a length equal to over 60% of the total length of said first conjugate mating surfaces (A₅, A₇).

5. A turbomachine blade as claimed in any one of the foregoing Claims, **characterized by** also comprising a metal upper coupling head (4) at the opposite end of the airfoil-shaped oblong member (3) to said coupling root (2) .

6. A turbomachine blade as claimed in Claim 5, **characterized in that** the airfoil-shaped oblong member (3) also comprises an upper connecting fin (6) cantilevered projecting from the coupling head (4) towards the coupling root (2) and formed in one piece with the coupling head (4); and the main plate-like body (7) is shaped and positioned between the lower (5) and upper (6) connecting fins to also form an extension of the upper connecting fin (6), and is also butt-welded to, to form one piece with, the upper connecting fin (6) .

7. A turbomachine blade as claimed in Claim 6, **characterized in that** the upper edge (7b) of the main plate-like body (7) and the ridge (6a) of the upper connecting fin (6) are shaped to merge along strip-shaped second conjugate mating surfaces (B₆, B₇) complementary to each other and which extend, on the laying plane/centreline plane (P) of the airfoil-shaped oblong member (3), from the leading edge (3a) to the trailing edge (3b) of the airfoil-shaped oblong member (3) along a curved path.

8. A turbomachine blade as claimed in Claim 7, **characterized in that** said second conjugate mating surfaces (B₆, B₇) extend from the leading edge (3a) to the trailing edge (3b) of the airfoil-shaped oblong member (3) along a curved, substantially Ω (omega) shaped path.

9. A turbomachine blade as claimed in Claim 7 or 8, **characterized in that** a centre portion of said second conjugate mating surfaces (B₆, B₇), preferably of a length equal to over 60% of the total length of said second conjugate mating surfaces (B₆, B₇), is of substantially constant width (l_{b}) substantially equal to the maximum thickness of the main plate-like body (7).

10. A method of producing a turbomachine blade (1) of the type comprising a metal coupling root (2), and a metal airfoil-shaped oblong member (3) which is divided into a lower connecting fin (5) cantilevered projecting from the coupling root (2), and a main plate-like body (7) forming an extension of said lower connecting fin (5); the method comprising the steps of :
- making a first semifinished metal part (20) having a three-dimensional shape which over-approximates the shape of the coupling root (2) of the blade (1), and which also has a projecting appendage (25) having a three-dimensional shape which over-approximates the shape of the lower connecting fin (5);
- making a metal plate (70) having a substantially constant thickness (s) over-approximating the maximum thickness of the main plate-like body (7), and having a three-dimensional shape which over-approximates the shape of the main plate-like body (7);
- removing the bottom portion (71) of the plate (70) located beyond a first transverse reference line (Tₐ) having a curved profile in the laying plane/centreline plane (P) of the plate (70);
- removing the portion of the ridge (25a) of the projecting appendage (25) of the first semifinished part (20) located beyond a second transverse reference line (Fₐ) which, in the laying plane/centreline plane (P) of the projecting appendage (25), has a curved profile substantially identical to that of the first transverse reference line (Tₐ);
- placing the lower edge (70a) of the plate (70) corresponding to said first transverse reference line (Tₐ) in abutment on the ridge (25a) of the projecting appendage (25) of said first semifinished part (20), while locally aligning the plate (70) to the projecting appendage (25) of the first semifinished part (20);
- butt-welding the lower edge (70a) of the plate (70) to the projecting appendage (25) of said first semifinished part (20) to rigidly merge the two parts to each other; and
- trimming/machining the excess material off the resulting part to obtain the coupling root (2) and the airfoil-shaped oblong member (3) of the blade (1).

11. A method of producing a turbomachine blade, as claimed in Claim 10, **characterized in that** said first transverse reference line (Tₐ) is the locus of points in which the thickness of the plate (70) over-approximates locally the maximum thickness of the main plate-like body (7) of the airfoil-shaped oblong member (3); and said second transverse reference line (Fₐ) is the locus of points in which the thickness of the projecting appendage (25) of the first semifinished part (20) over-approximates locally the maximum thickness of the main plate-like body (7) of the airfoil-shaped oblong member (3) .

12. A method of producing a turbomachine blade, as claimed in Claim 10 or 11, **characterized in that** said first transverse reference line (Tₐ) has a substantially Ω (omega) shaped profile; and said second transverse reference line (Fₐ) has a curved, substantially Ω (omega) shaped profile substantially identical to that of the first transverse reference line (Tₐ).

13. A method of producing a turbomachine blade, as claimed in Claim 10, 11 or 12, **characterized in that** the step of trimming/machining the excess material off the resulting part comprises the step of trimming/machining excess metal off the two faces of the plate (70).

14. A method of producing a turbomachine blade, as claimed in any one of Claims 10 to 13, **characterized in that** the step of trimming/machining the excess material off the resulting part comprises the step of trimming/machining excess metal off the long side edges of the plate (70), so as to form the leading edge (3a) and trailing edge (3b) of the airfoil-shaped oblong member (3).

15. A method of producing a turbomachine blade, as claimed in any one of Claims 10 to 14, **characterized in that** said blade (1) also comprises an upper coupling head (4), and the airfoil-shaped oblong member (3) also comprises an upper connecting fin (6), which cantilevered projects from the coupling head (4) towards the coupling root (2) and is merged to said main plate-like body (7); the method being **characterized by** also comprising the steps of :
- making a second semifinished metal part (40) having a three-dimensional shape which over-approximates the shape of the coupling head (4) of the blade (1), and which also has a projecting appendage (46) having a three-dimensional shape which over-approximates the shape of the upper connecting fin (6);
- removing the top portion (72) of the plate (70) located beyond a third transverse reference line (T_{b}) having a curved profile in the laying plane/centreline plane (P) of the plate (70);
- removing the portion of the ridge (46b) of the projecting appendage (46) of the second semifinished part (40) located beyond a fourth transverse reference line (F_{b}) which, in the laying plane/centreline plane (P) of the projecting appendage (46), has a curved profile substantially identical to that of the third transverse reference line (T_{b});
- placing the upper edge (70b) of the plate (70) corresponding to said third transverse reference line (T_{b}) in abutment on the ridge (46b) of the projecting appendage (46) of said second semifinished part (40), while locally aligning the plate (70) to the projecting appendage (46) of the second semifinished part (40);
- butt-welding the upper edge (70b) of the plate (70) to the projecting appendage (46) of said second semifinished part (40) to merge the two parts rigidly to each other; and
- trimming/machining the excess material off the resulting part to also obtain the coupling head (4) of the blade (1).

16. A method of producing a turbomachine blade, as claimed in Claim 15, **characterized in that** said third transverse reference line (T_{b}) is the locus of points in which the thickness of the plate (70) over-approximates locally the maximum thickness of the main plate-like body (7) of the airfoil-shaped oblong member (3); and said fourth transverse reference line (F_{b}) is the locus of points in which the thickness of the projecting appendage (46) of the second semifinished part (40) over-approximates locally the maximum thickness of the main plate-like body (7) of the airfoil-shaped oblong member (3).

17. A method of producing a turbomachine blade, as claimed in Claim 15 or 16, **characterized in that** said third transverse reference line (T_{b}) has a substantially Ω (omega) shaped profile; and said fourth transverse reference line (F_{b}) has a curved, substantially Ω (omega) shaped profile substantially identical to that of the third transverse reference line (T_{b}).

18. A method of producing a turbomachine blade, as claimed in any one of Claims 10 to 17, **characterized in that** the difference between the thickness (s) of said metal plate (70) and the maximum thickness of the main plate-like body (7) of the airfoil-shaped oblong member (3) is less than 2 millimetres.

19. A method of producing a turbomachine blade, as claimed in any one of Claims 10 to 18, **characterized in that** the step of making the metal plate (70) of substantially constant thickness over-approximating the maximum thickness of the main plate-like body (7) comprises the steps of :
- cutting, from a large flat metal plate of constant thickness over-approximating the maximum thickness of the main plate-like body (7) of the airfoil-shaped oblong member (3) of the blade (1), a plate piece (100) with a contour over-approximating the flat contour of the main plate-like body (7) of the airfoil-shaped oblong member (3); and
- twisting and curving the plate piece (100) via press-forming, so that the final three-dimensional shape of the centreline plane (M) of the press-formed plate piece (100) substantially matches the three-dimensional shape of the centreline plane (P) of the main plate-like body (7) of the airfoil-shaped oblong member (3) of the blade (1).

## Patentansprüche

1. Turbomaschinenschaufel (1), aufweisend einen Metallkopplungsfuß (2) und ein längliches Metallelement mit aerodynamischer Profilform (3), das auskragend aus dem Kopplungsfuß (2) hervorsteht; wobei das längliche Element mit aerodynamischer Profilform (3) in mindestens eine untere Verbindungsrippe (5), die auskragend aus dem Kopplungsfuß (2) hervorsteht und in einem Stück damit gebildet ist, und in einen hauptplattenartigen Körper (7), der eine Verlängerung der unteren Verbindungsrippe (5) bildet und mit der unteren Verbindungsrippe (5) stumpfverschweißt ist, um ein Stück mit derselben Rippe zu bilden, unterteilt ist;
wobei die untere Kante (7a) des hauptplattenartigen Körpers (7) und der Grat (5a) der unteren Verbindungsrippe (5) geformt sind, um sich entlang streifenförmiger erster konjugierter Passflächen (A₅, A₇), die komplementär zueinander sind, zu verbinden,
**dadurch gekennzeichnet, dass** die untere Kante (7a) und der Grat (5a) sich auf der Legeebene / Mittellinienebene (P) des länglichen Elements mit aerodynamischer Profilform (3) von der Führungskante (3a) zur Hinterkante (3b) des länglichen Elements mit aerodynamischer Profilform (3) entlang eines gekrümmten Weges erstrecken.

2. Turbomaschinenschaufel wie in Anspruch 1 beansprucht, **dadurch gekennzeichnet, dass** die ersten konjugierten Passflächen (A₅, A₇) sich von der Führungskante (3a) zur Hinterkante (3b) des länglichen Elements mit aerodynamischer Profilform (3) entlang eines gekrümmten, im wesentlichen Ω (omega)-förmigen Weges erstrecken.

3. Turbomaschinenschaufel wie in Anspruch 1 oder 2 beansprucht, **dadurch gekennzeichnet, dass** ein Mittelabschnitt von gegebener Länge der ersten konjugierten Passflächen (A₅, A₇) von im wesentlichen konstanter Breite (lₐ) ist, die im wesentlichen gleich der maximalen Dicke des hauptplattenartigen Körpers (7) ist.

4. Turbomaschinenschaufel wie in Anspruch 3 beansprucht, **dadurch gekennzeichnet, dass** die Breite (lₐ) der ersten konjugierten Passflächen (A₅, A₇) im wesentlichen konstant ist, und im wesentlichen gleich der maximalen Dicke des hauptplattenartigen Körpers (7), zumindest entlang eines Mittelabschnitts mit einer Länge, die über 60% der Gesamtlänge der ersten konjugierten Passflächen (A₅, A₇) entspricht.

5. Turbomaschinenschaufel wie in einem der vorhergehenden Ansprüche beansprucht, **dadurch gekennzeichnet, dass** sie auch einen oberen Metallkopplungskopf (4) am gegenüberliegenden Ende des länglichen Elements mit aerodynamischer Profilform (3) zum Kopplungsfuß (2) aufweist.

6. Turbomaschinenschaufel wie in Anspruch 5 beansprucht, **dadurch gekennzeichnet, dass** das längliche Element mit aerodynamischer Profilform (3) auch eine obere Verbindungsrippe (6) aufweist, die auskragend vom Kopplungskopf (4) in Richtung zum Kopplungsfuß (2) hervorsteht und in einem Stück mit dem Kopplungskopf (4) ausgebildet ist; und der hauptplattenartige Körper (7) zwischen der unteren (5) und oberen (6) Verbindungsrippe geformt und positioniert ist, um auch eine Verlängerung der oberen Verbindungsrippe (6) zu bilden, und auch stumpfverschweißt ist mit der oberen Verbindungsrippe (6), um ein Stück damit zu bilden.

7. Turbomaschinenschaufel wie in Anspruch 6 beansprucht, **dadurch gekennzeichnet, dass** die obere Kante (7b) des hauptplattenartigen Körpers (7) und der Grat (6a) der oberen Verbindungsrippe (6) geformt sind, um sich entlang der streifenförmigen zweiten konjugierten Passflächen (B₆, B₇), die komplementär zueinander sind, zu verbinden, und die sich auf der Legeebene / Mittellinienebene (P) des länglichen Elements mit aerodynamischer Profilform (3) von der Führungskante (3a) zur Hinterkante (3b) des länglichen Elements mit aerodynamischer Profilform (3) entlang eines gekrümmten Weges erstrecken.

8. Turbomaschinenschaufel wie in Anspruch 7 beansprucht, **dadurch gekennzeichnet, dass** sich die zweiten konjugierten Passflächen (B₆, B₇) von der Führungskante (3a) zur Hinterkante (3b) des länglichen Elements mit aerodynamischer Profilform (3) entlang eines gekrümmten, im wesentlichen Ω (omega)-förmigen Weges erstrecken.

9. Turbomaschinenschaufel wie in Anspruch 7 oder 8 beansprucht, **dadurch gekennzeichnet, dass** ein Mittelabschnitt der zweiten konjugierten Passflächen (B₆, B₇), bevorzugt mit einer Länge von mehr als 60% der Gesamtlänge der zweiten konjugierten Passflächen (B₆, B₇), eine im wesentlichen konstante Breite (l_{b}) aufweist, im wesentlichen gleich der maximalen Dicke des hauptplattenartigen Körpers (7).

10. Verfahren zur Herstellung einer Turbomaschinenschaufel (1) des Typs, der einen Metallkopplungsfuß (2) und ein längliches Metallelement mit aerodynamischer Profilform (3), das in eine untere Verbindungsrippe (5), die auskragend aus dem Kopplungsfuß (2) hervorsteht, und einen hauptplattenartigen Körper (7), der eine Verlängerung der unteren Verbindungsrippe (5) bildet, aufgeteilt ist, aufweist, wobei das Verfahren folgende Schritte umfasst:
- Herstellen eines ersten halbfertigen Metallteils (20) mit einer dreidimensionalen Form, die sich der Form des Kopplungsfußes (2) der Schaufel (1) annähert, und das auch einen vorspringenden Anhang (25) mit einer dreidimensionalen Form aufweist, die sich der Form der unteren Verbindungsrippe (5) annähert;
- Herstellen einer Metallplatte (70) mit einer im wesentlichen konstanten Dicke (s), die sich der maximalen Dicke des hauptplattenartigen Körpers (7) annähert und eine dreidimensionale Form aufweist, die sich der Form des hauptplattenartigen Körpers (7) annähert;
- Entfernen des unteren Abschnitts (71) der Platte (70), der sich jenseits einer ersten Querreferenzlinie (Tₐ) mit einem gekrümmten Profil in der Legeebene / Mittellinienebene (P) der Platte (70) befindet;
- Entfernen des Abschnitts des Grats (25a) des vorspringenden Anhangs (25) des ersten halbfertigen Teils (20), der sich jenseits einer zweiten Querreferenzlinie (Fₐ) befindet, die in der Legeebene / Mittellinienebene (P) des vorspringenden Anhangs (25) ein gekrümmtes Profil aufweist, das im wesentlichen mit dem der ersten Querreferenzlinie (Tₐ) identisch ist;
- Platzieren der unteren Kante (70a) der Platte (70) entsprechend der ersten Querreferenzlinie (Tₐ) anliegend an den Grat (25a) des vorspringenden Anhangs (25) des ersten halbfertigen Teils (20), während die Platte (70) lokal mit dem vorspringenden Anhang (25) des ersten halbfertigen Teils (20) ausgerichtet wird;
- Stumpfverschweißen der unteren Kante (70a) der Platte (70) an den vorspringenden Anhang (25) des ersten halbfertigen Teils (20), um die beiden Teile starr miteinander zu verbinden; und
- Zuschneiden / Bearbeiten des überschüssigen Materials vom sich ergebenden Teil, um den Kopplungsfuß (2) und das längliche Element mit aerodynamischer Profilform (3) der Schaufel (1) zu erhalten.

11. Verfahren zur Herstellung einer Turbomaschinenschaufel wie in Anspruch 10 beansprucht, **dadurch gekennzeichnet, dass** die erste Querreferenzlinie (Tₐ) der Ort von Punkten ist, an denen sich die Dicke der Platte (70) lokal der maximalen Dicke des hauptplattenartigen Körpers (7) des länglichen Elements mit aerodynamischer Profilform (3) annähert; und die zweite Querreferenzlinie (Fₐ) der Ort von Punkten ist, an denen die Dicke des vorspringenden Anhangs (25) des ersten halbfertigen Teils (20) sich lokal der maximalen Dicke des hauptplattenartigen Körpers (7) des länglichen Elements mit aerodynamischer Profilform (7) annähert.

12. Verfahren zur Herstellung einer Turbomaschinenschaufel wie in Anspruch 10 oder 11 beansprucht, **dadurch gekennzeichnet, dass** die erste Querreferenzlinie (Tₐ) ein im wesentlichen Ω (omega)-förmiges Profil aufweist; und die zweite Querreferenzlinie (Fₐ) ein gekrümmtes, im wesentlichen Ω (omega)-förmiges Profil aufweist, das im wesentlichen mit dem der ersten Querreferenzlinie (Tₐ) identisch ist.

13. Verfahren zur Herstellung einer Turbomaschinenschaufel wie in Anspruch 10, 11 oder 12 beansprucht, **dadurch gekennzeichnet, dass** der Schritt des Zuschneidens / Bearbeitens des überschüssigen Materials von dem sich ergebenden Teil den Schritt des Zuschneidens / Bearbeitens von überschüssigem Metall von den beiden Seiten der Platte (70) umfasst.

14. Verfahren zur Herstellung einer Turbomaschinenschaufel wie in einem der Ansprüche 10 bis 13 beansprucht, **dadurch gekennzeichnet, dass** der Schritt des Zuschneidens / Bearbeitens des überschüssigen Materials von dem sich ergebenden Teil den Schritt des Zuschneidens / Bearbeitens von überschüssigem Metall von den langen Seitenkanten der Platte (70) umfasst, um die Führungskante (3a) und die Hinterkante (3b) des länglichen Elements mit aerodynamischer Profilform (3) zu bilden.

15. Verfahren zur Herstellung einer Turbomaschinenschaufel wie in einem der Ansprüche 10 bis 14 beansprucht, **dadurch gekennzeichnet, dass** die Schaufel (1) auch einen oberen Kopplungskopf (4) aufweist, und das längliche Element mit aerodynamischer Profilform (3) auch eine obere Verbindungsrippe (6) aufweist, die auskragend vom Kopplungskopf (4) in Richtung zum Kopplungsfuß (2) hervorsteht und sich mit dem hauptplattenartigen Körper (7) verbindet; wobei das Verfahren dadurch charakterisiert ist, dass es auch folgende Schritte umfasst:
- Herstellen eines zweiten halbfertigen Metallteils (40) mit einer dreidimensionalen Form, die sich der Form des Kopplungskopfes (4) der Schaufel (1) annähert, und das auch einen vorspringenden Anhang (46) mit einer dreidimensionalen Form aufweist, die sich der Form der oberen Verbindungsrippe (6) annähert;
- Entfernen des oberen Abschnitts (72) der Platte (70), der sich jenseits einer dritten Querreferenzlinie (T_{b}) mit einem gekrümmten Profil in der Legeebene / Mittellinienebene (P) der Platte (70) befindet;
- Entfernen des Teils des Grats (46b) des vorspringenden Anhangs (46) des zweiten halbfertigen Teils (40), der sich jenseits einer vierten Querreferenzlinie (F_{b}) befindet, die in der Legeebene / Mittellinienebene (P) des vorspringenden Anhangs (46) ein gekrümmtes Profil aufweist, das im wesentlichen mit dem der dritten Querreferenzlinie (T_{b}) identisch ist;
- Platzieren der oberen Kante (70b) der Platte (70) entsprechend der dritten Querreferenzlinie (T_{b}) anliegend an den Grat (46b) des vorspringenden Anhangs (46) des zweiten halbfertigen Teils (40), während die Platte (70) lokal mit dem vorspringenden Anhang (46) des zweiten halbfertigen Teils (40) ausgerichtet wird;
- Stumpfverschweißen der oberen Kante (70b) der Platte (70) mit dem vorspringenden Anhang (46) des zweiten halbfertigen Teils (40), um die beiden Teile starr miteinander zu verbinden; und
- Zuschneiden / Bearbeiten des überschüssigen Materials von dem sich ergebenden Teil, um auch den Kopplungskopf (4) der Schaufel (1) zu erhalten.

16. Verfahren zur Herstellung einer Turbomaschinenschaufel wie in Anspruch 15 beansprucht, **dadurch gekennzeichnet, dass** die dritte Querreferenzlinie (T_{b}) der Ort von Punkten ist, an denen sich die Dicke der Platte (70) lokal der maximalen Dicke des hauptplattenartigen Körpers (7) des länglichen Elements mit aerodynamischer Profilform (3) annähert; und die vierte Querreferenzlinie (F_{b}) der Ort von Punkten ist, an denen die Dicke des vorspringenden Anhangs (46) des zweiten halbfertigen Teils (40) sich lokal der maximalen Dicke des hauptplattenartigen Körpers (7) des länglichen Elements mit aerodynamischer Profilform (7) annähert.

17. Verfahren zur Herstellung einer Turbomaschinenschaufel wie in Anspruch 15 oder 16 beansprucht, **dadurch gekennzeichnet, dass** die dritte Querreferenzlinie (T_{b}) ein im wesentlichen Ω (omega)-förmiges Profil aufweist; und die vierte Querreferenzlinie (F_{b}) ein gekrümmtes, im wesentlichen Ω (omega)-förmiges Profil aufweist, das im wesentlichen mit dem der dritten Querreferenzlinie (T_{b}) identisch ist.

18. Verfahren zur Herstellung einer Turbomaschinenschaufel wie in einem der Ansprüche 10 bis 17 beansprucht, **dadurch gekennzeichnet, dass** die Differenz zwischen der Dicke (s) der Metallplatte (70) und der maximalen Dicke des hauptplattenartigen Körpers (7) des länglichen Elements mit aerodynamischer Profilform (3) weniger als 2 Millimeter beträgt.

19. Verfahren zur Herstellung einer Turbomaschinenschaufel wie in einem der Ansprüche 10 bis 18 beansprucht, **dadurch gekennzeichnet, dass** der Schritt des Herstellens der Metallplatte (70) von im wesentlichen konstanter Dicke, die sich der maximalen Dicke des hauptplattenartigen Körpers (7) annähert, die folgenden Schritte umfasst:
- Schneiden aus einer großen flachen Metallplatte konstanter Dicke, die sich der maximalen Dicke des hauptplattenartigen Körpers (7) des länglichen Elements mit aerodynamischer Profilform (3) der Schaufel (1) annähert, eines Plattenstücks (100) mit einer Kontur, die sich der flachen Kontur des hauptplattenartigen Körpers (7) des länglichen Elements mit aerodynamischer Profilform (3) annähert; und
- Verdrehen und Krümmen des Plattenstücks (100) durch Pressformen, so dass die endgültige dreidimensionale Form der Mittellinienebene (M) des pressgeformten Plattenstücks (100) im Wesentlichen mit der dreidimensionalen Form der Mittellinienebene (P) des hauptplattenartigen Körpers (7) des länglichen Elements mit aerodynamischer Profilform (3) der Schaufel (1) übereinstimmt.

## Revendications

1. Aube de turbomachine (1) comprenant un pied de couplage en métal (2), et un organe oblong en forme de surface portante en métal (3) faisant saillie en porte-à-faux depuis le pied de couplage (2) ; l'organe oblong en forme de surface portante (3) étant divisé en au moins une ailette de raccordement inférieure (5) faisant saillie en porte-à-faux depuis le pied de couplage (2) et formée d'une seule pièce avec celui-ci, et en un corps principal de type plaque (7) qui forme une extension de ladite ailette de raccordement inférieure (5) et est soudé bout à bout à ladite ailette de raccordement inférieure (5) pour former une seule pièce avec cette même ailette ; le bord inférieur (7a) du corps principal de type plaque (7) et l'arête (5a) de l'ailette de raccordement inférieure (5) sont formés pour fusionner le long de premières surfaces d'appariement conjuguées en forme de bande (A₅, A₇) complémentaires l'une de l'autre, **caractérisée en ce que** le bord inférieur (7a) et l'arête (5a) s'étendent, sur le plan horizontal/plan de ligne centrale (P) de l'organe oblong en forme de surface portante (3), du bord d'attaque (3a) au bord de fuite (3b) de l'organe oblong en forme de surface portante (3) le long d'un chemin courbé.

2. Aube de turbomachine selon la revendication 1, **caractérisée en ce que** lesdites premières surfaces d'appariement conjuguées (A₅, A₇) s'étendent du bord d'attaque (3a) au bord de fuite (3b) de l'organe oblong en forme de surface portante (3) le long d'un chemin courbé, sensiblement en forme de Ω (oméga).

3. Aube de turbomachine selon la revendication 1 ou 2, **caractérisée en ce qu'**une portion de centre de longueur donnée desdites premières surfaces d'appariement conjuguées (A₅, A₇) est de largeur sensiblement constante (lₐ) sensiblement égale à l'épaisseur maximale du corps principal de type plaque (7).

4. Aube de turbomachine selon la revendication 3, **caractérisée en ce que** la largeur (lₐ) desdites premières surfaces d'appariement conjuguées (A₅, A₇) est sensiblement constante, et sensiblement égale à l'épaisseur maximale du corps principal de type plaque (7), au moins le long d'une portion de centre d'une longueur égale à plus de 60 % de la longueur totale desdites premières surfaces d'appariement conjuguées (A₅, A₇).

5. Aube de turbomachine selon l'une quelconque des revendications précédentes, **caractérisée en ce qu'**elle comprend également une tête de couplage supérieure en métal (4) à l'extrémité opposée de l'organe oblong en forme de surface portante (3) audit pied de couplage (2).

6. Aube de turbomachine selon la revendication 5, **caractérisée en ce que** l'organe oblong en forme de surface portante (3) comprend également une ailette de raccordement supérieure (6) faisant saillie en porte-à-faux depuis la tête de couplage (4) vers le pied de couplage (2) et formée d'une seule pièce avec la tête de couplage (4) ; et le corps principal de type plaque (7) est formé et positionné entre les ailettes de raccordement inférieure (5) et supérieure (6) pour former également une extension de l'ailette de raccordement supérieure (6), et est également soudé bout à bout à l'ailette de raccordement supérieure (6), pour former une seule pièce avec celle-ci.

7. Aube de turbomachine selon la revendication 6, **caractérisée en ce que** le bord supérieur (7b) du corps principal de type plaque (7) et l'arête (6a) de l'ailette de raccordement supérieure (6) sont formés pour fusionner le long de secondes surfaces d'appariement conjuguées en forme de bande (B₆, B₇) complémentaires l'une de l'autre et qui s'étendent, sur le plan horizontal/plan de ligne centrale (P) de l'organe oblong en forme de surface portante (3), du bord d'attaque (3a) au bord de fuite (3b) de l'organe oblong en forme de surface portante (3) le long d'un chemin courbé.

8. Aube de turbomachine selon la revendication 7, **caractérisée en ce que** lesdites secondes surfaces d'appariement conjuguées (B₆, B₇) s'étendent du bord d'attaque (3a) au bord de fuite (3b) de l'organe oblong en forme de surface portante (3) le long d'un chemin courbé, sensiblement en forme de Ω (oméga).

9. Aube de turbomachine selon la revendication 7 ou 8, **caractérisée en ce qu'**une portion de centre desdites secondes surfaces d'appariement conjuguées (B₆, B₇), de préférence d'une longueur égale à plus de 60 % de la longueur totale desdites secondes surfaces d'appariement conjuguées (B₆, B₇), est de largeur sensiblement constante (l_{b}) sensiblement égale à l'épaisseur maximale du corps principal de type plaque (7).

10. Procédé de production d'une aube de turbomachine (1) du type comprenant un pied de couplage en métal (2), et un organe oblong en forme de surface portante en métal (3) qui est divisé en une ailette de raccordement inférieure (5) faisant saillie en porte-à-faux depuis le pied de couplage (2), et un corps principal de type plaque (7) formant une extension de ladite ailette de raccordement inférieure (5) ; le procédé comprenant les étapes de :
- réalisation d'une première pièce en métal semi-finie (20) ayant une forme tridimensionnelle qui présente une surapproximation de la forme du pied de couplage (2) de l'aube (1), et qui a également un appendice saillant (25) ayant une forme tridimensionnelle qui présente une surapproximation de la forme de l'ailette de raccordement inférieure (5) ;
- réalisation d'une plaque en métal (70) ayant une épaisseur sensiblement constante (s) présentant une surapproximation de l'épaisseur maximale du corps principal de type plaque (7), et ayant une forme tridimensionnelle qui présente une surapproximation de la forme du corps principal de type plaque (7) ;
- retrait de la portion de dessous (71) de la plaque (70) située au-delà d'une première ligne de référence transversale (Tₐ) ayant un profil courbé dans le plan horizontal/plan de ligne centrale (P) de la plaque (70) ;
- retrait de la portion de l'arête (25a) de l'appendice saillant (25) de la première pièce semi-finie (20) située au-delà d'une deuxième ligne de référence transversale (Fₐ) qui, dans le plan horizontal/plan de ligne centrale (P) de l'appendice saillant (25), a un profil courbé sensiblement identique à celui de la première ligne de référence transversale (Tₐ) ;
- placement du bord inférieur (70a) de la plaque (70) correspondant à ladite première ligne de référence transversale (Tₐ) en butée sur l'arête (25a) de l'appendice saillant (25) de ladite première pièce semi-finie (20), tout en alignant localement la plaque (70) sur l'appendice saillant (25) de la première pièce semi-finie (20) ;
- soudage bout à bout du bord inférieur (70a) de la plaque (70) à l'appendice saillant (25) de ladite première pièce semi-finie (20) pour fusionner de façon rigide les deux pièces l'une à l'autre ; et
- ébavurage/usinage de l'excédent de matière de la pièce résultante pour obtenir le pied de couplage (2) et l'organe oblong en forme de surface portante (3) de l'aube (1).

11. Procédé de production d'une aube de turbomachine, selon la revendication 10, **caractérisé en ce que** ladite première ligne de référence transversale (Tₐ) est le lieu de points dans lesquels l'épaisseur de la plaque (70) présente une surapproximation locale de l'épaisseur maximale du corps principal de type plaque (7) de l'organe oblong en forme de surface portante (3) ; et ladite deuxième ligne de référence transversale (Fₐ) est le lieu de points dans lesquels l'épaisseur de l'appendice saillant (25) de la première pièce semi-finie (20) présente une surapproximation locale de l'épaisseur maximale du corps principal de type plaque (7) de l'organe oblong en forme de surface portante (3).

12. Procédé de production d'une aube de turbomachine, selon la revendication 10 ou 11, **caractérisé en ce que** ladite première ligne de référence transversale (Tₐ) a un profil sensiblement en forme de Ω (oméga) ; et ladite deuxième ligne de référence transversale (Fₐ) a un profil courbé sensiblement en forme de Ω (oméga) sensiblement identique à celui de la première ligne de référence transversale (Tₐ).

13. Procédé de production d'une aube de turbomachine, selon la revendication 10, 11 ou 12, **caractérisé en ce que** l'étape d'ébavurage/usinage de l'excédent de matière de la pièce résultante comprend l'étape d'ébavurage/usinage d'excédent de métal des deux faces de la plaque (70).

14. Procédé de production d'une aube de turbomachine, selon l'une quelconque des revendications 10 à 13, **caractérisé en ce que** l'étape d'ébavurage/usinage de l'excédent de matière de la pièce résultante comprend l'étape d'ébavurage/usinage d'excédent de métal des bords de côté long de la plaque (70), de façon à former le bord d'attaque (3a) et le bord de fuite (3b) de l'organe oblong en forme de surface portante (3).

15. Procédé de production d'une aube de turbomachine, selon l'une quelconque des revendications 10 à 14, **caractérisé en ce que** ladite aube (1) comprend également une tête de couplage supérieure (4), et l'organe oblong en forme de surface portante (3) comprend également une ailette de raccordement supérieure (6), qui fait saillie en porte-à-faux depuis la tête de couplage (4) vers le pied de couplage (2) et est fusionnée avec ledit corps principal de type plaque (7) ; le procédé étant **caractérisé en ce qu'**il comprend également les étapes de :
- réalisation d'une seconde pièce en métal semi-finie (40) ayant une forme tridimensionnelle qui présente une surapproximation de la forme de la tête de couplage (4) de l'aube (1), et qui a également un appendice saillant (46) ayant une forme tridimensionnelle qui présente une surapproximation de la forme de l'ailette de raccordement supérieure (6) ;
- retrait de la portion de dessus (72) de la plaque (70) située au-delà d'une troisième ligne de référence transversale (T_{b}) ayant un profil courbé dans le plan horizontal/plan de ligne centrale (P) de la plaque (70) ;
- retrait de la portion de l'arête (46b) de l'appendice saillant (46) de la seconde pièce semi-finie (40) située au-delà d'une quatrième ligne de référence transversale (F_{b}) qui, dans le plan horizontal/plan de ligne centrale (P) de l'appendice saillant (46), a un profil courbé sensiblement identique à celui de la troisième ligne de référence transversale (T_{b}) ;
- placement du bord supérieur (70b) de la plaque (70) correspondant à ladite troisième ligne de référence transversale (T_{b}) en butée sur l'arête (46b) de l'appendice saillant (46) de ladite seconde pièce semi-finie (40), tout en alignant localement la plaque (70) sur l'appendice saillant (46) de la seconde pièce semi-finie (40) ;
- soudage bout à bout du bord supérieur (70b) de la plaque (70) à l'appendice saillant (46) de ladite seconde pièce semi-finie (40) pour fusionner les deux pièces de façon rigide l'une à l'autre ; et
- ébavurage/usinage de l'excédent de matière de la pièce résultante pour obtenir également la tête de couplage (4) de l'aube (1).

16. Procédé de production d'une aube de turbomachine, selon la revendication 15, **caractérisé en ce que** ladite troisième ligne de référence transversale (T_{b}) est le lieu de points dans lesquels l'épaisseur de la plaque (70) présente une surapproximation locale de l'épaisseur maximale du corps principal de type plaque (7) de l'organe oblong en forme de surface portante (3) ; et ladite quatrième ligne de référence transversale (F_{b}) est le lieu de points dans lesquels l'épaisseur de l'appendice saillant (46) de la seconde pièce semi-finie (40) présente une surapproximation locale de l'épaisseur maximale du corps principal de type plaque (7) de l'organe oblong en forme de surface portante (3).

17. Procédé de production d'une aube de turbomachine, selon la revendication 15 ou 16, **caractérisé en ce que** ladite troisième ligne de référence transversale (T_{b}) a un profil sensiblement en forme de Ω (oméga) ; et ladite quatrième ligne de référence transversale (F_{b}) a un profil courbé, sensiblement en forme de Ω (oméga) sensiblement identique à celui de la troisième ligne de référence transversale (T_{b}).

18. Procédé de production d'une aube de turbomachine, selon l'une quelconque des revendications 10 à 17, **caractérisé en ce que** la différence entre l'épaisseur (s) de ladite plaque en métal (70) et l'épaisseur maximale du corps principal de type plaque (7) de l'organe oblong en forme de surface portante (3) est inférieure à 2 millimètres.

19. Procédé de production d'une aube de turbomachine, selon l'une quelconque des revendications 10 à 18, **caractérisé en ce que** l'étape de réalisation de la plaque en métal (70) d'épaisseur sensiblement constante présentant une surapproximation de l'épaisseur maximale du corps principal de type plaque (7) comprend les étapes de :
- découpe, à partir d'une grande plaque plate en métal d'épaisseur constante présentant une surapproximation de l'épaisseur maximale du corps principal de type plaque (7) de l'organe oblong en forme de surface portante (3) de l'aube (1), d'un morceau de plaque (100) avec un contour présentant une surapproximation du contour plat du corps principal de type plaque (7) de l'organe oblong en forme de surface portante (3) ; et
- torsion et courbage du morceau de plaque (100) par formage à la presse, de sorte que la forme tridimensionnelle finale du plan de ligne centrale (M) du morceau de plaque (100) formé à la presse concorde sensiblement avec la forme tridimensionnelle du plan de ligne centrale (P) du corps principal de type plaque (7) de l'organe oblong en forme de surface portante (3) de l'aube (1).
